# EUROPEAN PATENT APPLICATION

(11) **EP 1 416 505 A2**
(43) Date of publication of application: **06.05.2004**
(21) Application number: 03024586.4
(22) Date of filing: 28.10.2003
(51) Int. Cl.: H01H 3/00, H01H 19/00

(54) **Manual input device**

(30) Priority: 30.10.2002 JP 2002316229
(71) Applicant: ALPS ELECTRIC CO., LTD., Tokyo 145-8501 (JP)
(72) Inventor: Maeda, Takuya, Alps Electric Co., Ltd, Ota-ku Tokyo 145-8501 (JP)
(74) Representative: Klunker . Schmitt-Nilson . Hirsch

(57) **Abstract**

Four projections abutting respectively against the corner formed by side surfaces on the side surfaces of the end portion of a motor on the side opposite from an output shaft and the periphery thereof, the corner formed by side surfaces and the periphery thereof, the corner of the motor formed by side surfaces and the periphery thereof, and the corner of the motor formed by side surfaces and the periphery thereof are provided on the side plates of a motor holder, so that the motor stored in the motor holder can be pivoted about the projections.

## Description

### BACKGROUND OF THE INVENTION

### 1. Field of the Invention

The present invention relates to a manual input device provided in various electric equipment each having an operating member to be rotated manually for exerting a predetermined rotational force to the operating member according to the direction of rotation and the amount of rotation of the operating member.

### 2. Description of the Related Art

In the related art, there is a manual input device mounted on electric equipment for supplying signals to the electric equipment by rotating an operating member.

As an invention of a manual input device of this type previously applied by the present applicant, there is the one provided with an operating member to be rotated manually, a motor for exerting a rotational force to the operating member, a planet gear mechanism interposed between the operating member and the motor, detecting means for detecting the direction of rotation and the amount of rotation of the output shaft of the motor, and control means for controlling the motor so that the predetermined rotational force is exerted to the operating member according to the direction and amount of rotation of the output shaft detected by the detecting means.

The planet gear mechanism includes a sun gear to which the rotational force is supplied from the output shaft of the motor, a plurality of planet gears engaging the sun gear and moving around the sun gear, a ring gear engaging these planet gears on the inner peripheral side thereof, a carrier for rotatably supporting the plurality of planet gears and rotating along with the movement of the planet gears around the sun gear, and a carrier shaft rotating integrally with the carrier and the operating member.

In this manual input device, there is provided adjusting means for adjusting engagement between the sun gear and the planet gears. The adjusting means includes the sun gear formed into a drum shape, and supporting means for pivotably supporting the sun gear.

The supporting means includes a first revolving body fixed to the output shaft of the motor, and a second revolving body being formed integrally with the sun gar and engaged with the first revolving body so as to rotate integrally therewith. The supporting means also includes engaging means for engaging the first revolving body and the second revolving body so that the second revolving body is pivotably supported by the first revolving body and that the first revolving body and the second revolving body rotates integrally with each other.

According to the manual input device constructed as described above, when assembling the motor and the planet gear mechanism, engagement between the sun gear and the planet gears can be adjusted by pivoting the sun gear with respect to the planet gear by pivoting the second revolving body with respect to the first revolving body fixed to the output shaft of the motor.

The previous application described above is not published for the moment. Therefore, regarding information on literary documents relating other prior art, it is impossible to find documents in which statement relating the present invention is disclosed for the moment.

In the above described manual input device, it is necessary to form the sun gear into the drum shape, and it is also necessary to provide a plurality of projections and notches on the first revolving body and the second revolving body as engaging means for engaging the first revolving body fixed to the output shaft of the motor and the second revolving body which is integral with the sun gear. In other words, in the manual input device described above, the number of parts having complex configurations increases in comparison with the case in which the sun gear is fixed to the output shaft of the motor to engage the sun gar and the planet gear, and thus there arises a problem in which the cost for manufacturing the manual input device increases.

### SUMMARY OF THE INVENTION

In view of such circumstances, it is an object of the present invention to provide a manual input device in which engagement between the sun gear and the planet gears can be adjusted by a part having a simple configuration.

In order to achieve the object described above, the present invention includes an operating member to be rotated manually; a motor for exerting a rotational force to the operating member; a planet gear mechanism having a sun gear to be fixed to the output shaft of the motor, a plurality of planet gear engaging the sun gear and moving around the sun gear, a ring gear engaging the planet gears on the inner peripheral side thereof, a carrier for rotatably supporting the plurality of planet gears and rotating along with the movement of the planet gears around the sun gear, and a carrier shaft rotating integrally with the carrier and the operating member; detecting means for detecting at least one of the direction of rotation and the amount of rotation of the output shaft of the motor; control means for controlling the motor so that the predetermined rotational force is exerted to the operating member according to at least one of the direction of rotation and the amount of rotation of the output shaft detected by the detecting means, and a motor holder having a plurality of projections which abut against the side surfaces of the end portion of the motor on the side opposite from the output shaft for holding the motor.

According to the present invention constructed described above, since the sun gear fixed to the output shaft of the motor can be pivoted with respect to the planet gar by pivoting the motor held by the motor holder about the projections of the motor holder when assembling the motor and the planet gear mechanism, engagement between the sun gear and the planet gears can be adjusted. In other words, according to the present invention, engagement between the sun gear and the planet gears can be adjusted by a part having such a simple configuration as a motor holder having a plurality of projections.

In the invention described above, it is also possible to provide a plurality of pairs of such projection in such a manner that a pair of projections are disposed at two opposite locations with the intermediary of the centerline of the output shaft. In this arrangement of the invention, the motor can be pivoted by 360° in the stable state.

In the invention described above, the motor holder may have a projection that comes into abutment with the entire periphery of the side surfaces of the end portion of the motor on the side opposite from the output shaft instead of the plurality of projection. In this arrangement of the invention, the motor can be pivoted by 360° in the stable state.

The invention described above may be constructed in such a manner that the motor holder includes a pair of side plates disposed on the side of the motor in parallel with the output shaft, a first end plate opposing the end surface of the motor on the side of the output shaft, and a second end plate opposing the end surface of the motor on the side opposite from the output shaft, that the pair of side plates are provided respectively with the projection, that the first end plate is divided into an end plate strip integrated with one of the pair of side plates and an end plate strip integrated with the other one of the pair of side plates, that the second end plate includes a first hinge unit for rotatably supporting the one of side plate in such a direction that the one end plate strip moves away from the other end plate strip, and a second hinge unit for rotatably supporting the other side plate in such direction that the other end plate strip moves away from the one end plate strip, and that each end plate strip is formed with a notch forming a hole thorough which the output shaft is arranged.

In the invention constructed as described above, the one side plate and the one end plate strip being integral therewith may be opened and closed with respect to the other side plate and the other end pate strip being integral therewith by rotating each of the pair of side plates about the first hinge unit and the second hinge unit respectively.

### BRIEF DESCRIPTION OF THE DRAWINGS

Fig. 1 is an exploded perspective view of an embodiment of a manual input device according to the present invention;
Fig. 2 is a vertical cross-sectional view showing a planet gear mechanism provided in the manual input device according to the present invention; and
Fig. 3 is an explanatory drawing showing a state in which a motor held by a motor holder shown in Fig. 1 pivots.

### DESCRIPTION OF THE PREFERRED EMBODIMENTS

Referring now to the drawings, an embodiment of a manual input device according to the present invention will be described.

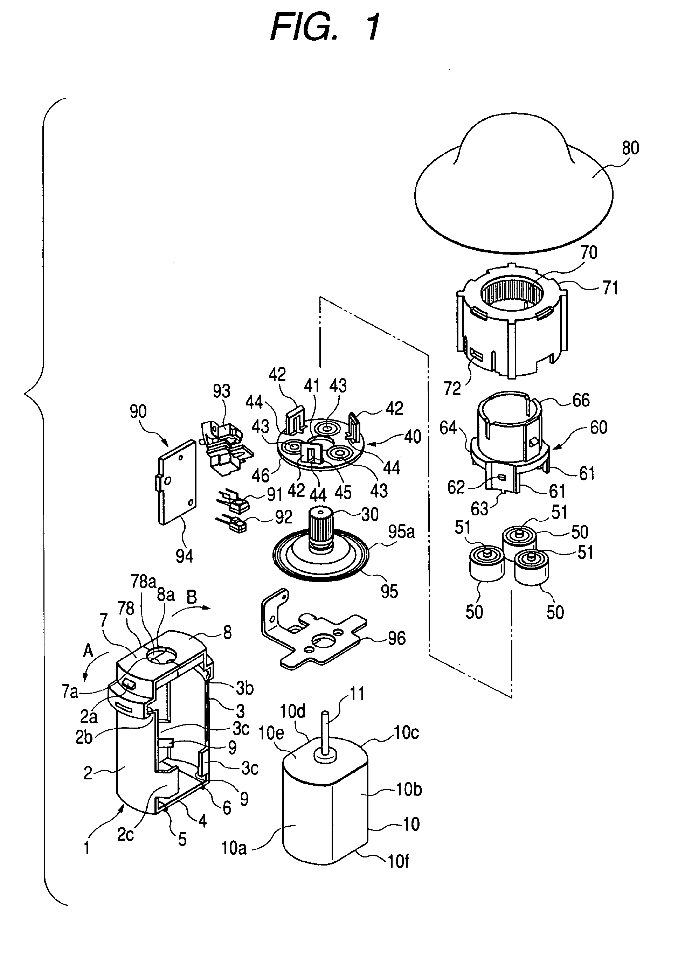

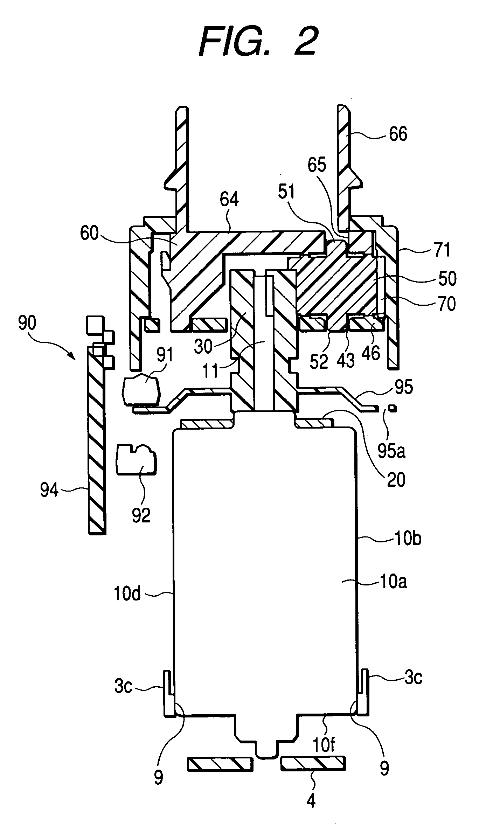

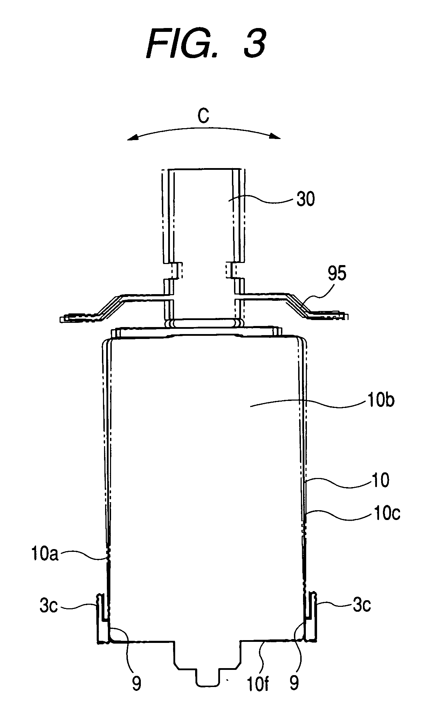

Fig. 1 is an exploded perspective view according to the embodiment, Fig. 2 is a vertical cross-sectional view showing a planet gear mechanism provided in the embodiment, and Fig. 3 is an explanatory drawing showing a state in which a motor held by a motor holder shown in Fig. 1 pivots.

The present embodiment includes an operating member 80 provided in electrical equipment, for example, on-vehicle electric equipment, and rotated manually as shown in Fig. 1 and Fig. 2, a motor for exerting a rotational force to the operating member 80, a planet gear mechanism interposed between the motor 10 and the operating member 80, detecting means for detecting the direction of rotation and the amount of rotation of an output shaft 11 of the motor 10, for example, an encoder 90, control means, not shown, for controlling the motor 10 so that a predetermined rotational force is exerted to the operating member 80 according to the direction of rotation and the amount of rotation of the output shaft 11 detected by the encoder 90, and a motor holder 1 for holding the motor 10.

The planet gear mechanism is constructed only of components formed of synthetic resin and, as shown in Fig. 2, includes a sun gear 30 to be fixed to the output shaft 11 of the motor 10, a plurality of, for example, three, planet gears 50 engaging the sun gear 30 and moving around the sun gear 30, a ring gear 70 engaging the planet gears 50 on the inner peripheral side thereof, a carrier 60 for rotatably supporting the three planet gears 50 respectively and rotating along with the movement of the planet gears 50 around the sun gear, and a carrier shaft 66 rotating integrally with the carrier 60 and the operating member 80.

Each of the planet gears 50 is, as shown in Fig. 2, integrally provided with revolving shafts 51, 52. The revolving shaft 51 is rotatably inserted into a shaft hole 65 formed on a disk portion 64 of the carrier 60. The revolving shaft 52 is rotatably inserted into a shaft hole 43 formed on a disk portion 46 of the limiting member 40 (shown in Fig. 1).

The carrier 60 is attached with the limiting member 40 for limiting the movement of the planet gear 50 in the axial direction by snap-fit as shown in Fig. 1. The carrier 60 is provided with three connecting portions 61 to be connected to the limiting member 40 extending along the periphery of the disk portion 64 thereof. The connecting portions 61 extend in the axial direction, each being provided with a snap claw 62 projecting in the direction orthogonal to the axial direction and a projection 63 projecting in the axial direction. The limiting member 40 is provided with three connecting portions 42 extending along the periphery of the disk portion 46 corresponding to the connecting portions 61 of the carrier 60. The connecting portion 42 is formed into an inverted angular U shape extending in the axial direction, and the snap claw 62 engages the opening 45 thereof. The disk potion 46 of the limiting member 44 includes a hole 44 at the center of the proximal portion of each connecting portion 42, to which the projection 63 is to be fitted.

The encoder 90 includes, as shown in Fig. 1, a code plate 95 formed integrally with the sun gear 30, a light emitting unit 92 and a light receiving unit 91 opposed to each other with the intermediary of the code plate 95, a circuit board 94 which is fixed to an end surface 10e of the motor 10 with a bracket 96 formed of metal and to which the light emitting unit 92 and the light receiving unit 91 are connected, and a holder 93 fixed to the circuit board 94 and holding the light emitting unit 92 and the light receiving unit 91. Although it is not shown, detected signals output from the encoder 90 are supplied to the control means.

The control means controls the motor 10 in such a manner that a predetermined rotational force is exerted to the operating member 80, for example, a rotational force of a predetermined strength is exerted to the operating member 80 in the direction opposite from the direction of rotation of the operating member 80, according to detected signals from the encoder 90, that is, according to the direction of rotation and the amount of rotation of the output shaft 11, though it is not shown.

The motor holder 1 includes, as shown in Fig. 1, a pair of side plates 2, 3 disposed on the side of the motor 10 in parallel with the output shaft 11, a first end plate 78 opposing to the end surface 10e of the motor 10 on the side of the output shaft 11, and the second end plate 4 opposing to the end surface 10f of the motor 10 on the side opposite from the output shaft 11.

The pair of side plates 2, 3 are provided with recesses 2b, 3d respectively for avoiding contact with the code plate 95.

The first end plate 78 is divided into an end plate strip 7 formed integrally with the side plate 2 and an end plate strip 8 formed integrally with the side plate 3. The end plate strip 7 and the end plate strip 8 are formed with notches 7a, 8a respectively for forming a hole 78a in which the sun gear 30 is rotatably arranged.

The second end plate 4 includes a first hinge unit 5 for rotatably supporting the side plate 2 in such direction that the end plate strip 7 moves away from the end plate strip 8, that is, in the direction indicated by an arrow A in Fig. 1, and a second hinge unit 6 for rotatably supporting the side plate 3 in such direction that the end plate strip 8 moves away from the end plate strip 7, that is, in the direction indicated by an arrow B in Fig. 1.

In other words, the motor holder 1 is constructed in such a manner that the side plate 2 and the end plate strip 7 can be opened and closed with respect to the side plate 3 and the end plate strip 8 by rotating the pair of side plates 2, 3 about the first hinge unit 5 and the second hinge unit 6, respectively.

The motor holder 1 is also constructed so as to be snap-fitted into the annular member 71 so as to touch the internal surface thereof with the end plate strip 7 and the end plate strip 8 abutted against each other. In other words, a snap claw 2a provided on the side plate 2 of the motor holder 1 engages the engaging hole 72 formed on the annular member 71, and a snap claw, not shown, provided on the side plate 3 in the same manner as the side plate 2 engages an engaging hole, not shown, formed on the annular member 71 in the same manner as the engaging hole 72. The annular member 71 is provided with the ring gear 70, whereby the ring gear 70 is fixed to the motor holder 1.

The pair of side plates 2, 3 are formed with the plurality of, for example, four projections 9 to be abutted against the side surfaces of the end portion of the motor 10 on the side opposite from the output shaft 11. The four projections 9 each are formed so as to abut against, for example, the corner formed by the side surfaces 10a, 10b on the side surfaces of the end portion of the motor 10 on the side opposite from the output shaft 11 and the periphery thereof, the corner formed by the side surfaces 10a, 10d and the periphery thereof, the corner of the motor 10 formed by the side surfaces 10b, 10c and the periphery thereof, and the corner of the motor 10 formed by the side surfaces 10c, 10d and the periphery thereof. In other words, the motor holder 1 is provided with two pairs of projections 9, each being disposed at two opposing locations with the intermediary of the centerline of the output shaft 11.

On both ends of the side plate 2, there are formed a pair of arm members 2c (one of them is not shown) formed into shapes which embrace the side surfaces 10b, 10d of the motor 10, and the projections 9 are formed from portions of the side plate 2 in the vicinity of the proximal portions of the respective arm members 2c along the arm members 2c. In the same manner, the side plate 3 is also provided with a pair of arm members 3c at both ends thereof formed into shapes which embrace the side surfaces 10b, 10d of the motor 10, and the projections 9 are formed from the portions of the side plates 3 in the vicinity of the proximal portions of the respective arm members 3c along the arm members 3c.

When the motor 10 is held by the motor holder 1, these four projections 9 provided on the motor holder 1 abut against the corner formed by the side surfaces 10a, 10b of the motor 10 and the periphery thereof, the corner formed by the side surfaces 10c, 10d and the periphery thereof, the corner formed by the side surface 10b and the side surface 10c and the periphery thereof, and the corner formed by the side surfaces 10d, 10a and the periphery thereof, respectively. Consequently, the motor 10 is pivotable by 360° about the projections 9.

For example, as shown in Fig. 3, the two projections 9 provided on the side plate 3 abut against the side surfaces 10a, 10c of the motor 10, respectively. The two projections 9 provided on the pair of arm members 2c of the side plate 2 also abut against the side surfaces 10a, 10c of the motor 10, respectively, in the same manner. Consequently, the motor 10 is pivotable in the direction indicated by an arrow C about the projection 9 abutted against the side surface 10a and the projection 9 abutted against the side surface 10c.

The present embodiment is operated as follows.

When the operating member 80 is rotated in one direction for example, the carrier shaft 66 and the carrier 60 rotates in one direction integrally with the operating member 80. Since the ring gear 70 is fixed to the motor holder 1, the planet gears 50 rotate in the opposite direction about the revolving shafts 51, 52 and move in one direction about the sun gear 30. Accordingly, the sun gear 30, the code plate 95, and the output shaft 11 rotate in one direction. The sun gear 30, the code plate 95, and the output shaft 11 rotate at a rotating speed increased from the rotating speed of the operating member 80 by the gear ratio between the sun gear 30 and the ring gear 70.

Then, the direction of rotation and the amount of rotation of the operating member 80 are detected by the encoder 90, the detected signals corresponding to the direction and the amount of rotation are supplied to the control means, and the control means controls the motor 10. Accordingly, a rotational force of a predetermined strength, for example, in the opposite direction is output from the output shaft 11 of the motor 10.

The rotational force in the other direction output from the output shaft 11 is transmitted to the operating member 80 via the sun gear 30, the planet gears 50, the carrier 60, and the carrier shaft 66. In other words, the operating member 80 is supplied with a rotational force in the opposite direction to the operating direction. Then the operating member 80 is supplied with a rotational force output from the output shaft 11 increased by the gear ratio between the sun gear 30 and the ring gear 70.

According to the present embodiment, the following effects are achieved.

According to the present embodiment, when assembling the motor 10 and the planet gear mechanism, the sun gear 30 fixed to the output shaft 11 of the motor 10 may be pivoted with respect to the planet gears 50 by pivoting the motor 10 held by the motor holder 1 about the projections 9 on the motor holder 1, so that engagement between the sun gear 30 and the planet gears 50 may be adjusted. In other words, according to the present embodiment, engagement between the sun gear 30 and the planet gears 50 may be adjusted by a component having such simple configuration as the motor holder 1 having the four projections 9, and thus the cost of manufacturing may be reduced.

According to the present embodiment, since the two pairs of projections 9, each being disposed at two opposing locations with the intermediary of the centerline of the output shaft 11, are provided, the motor 10 can be pivoted by 360° in the stable state, and thus accuracy of adjustment of engagement between the sun gear 30 and the planet gears 50. can be improved.

In addition, according to the present embodiment, the side plate 2 and the end plate strip 7 can be opened and closed with respect to the side plate 3 and the end plate strip 8 by rotating the pair of side plates 2, 3 about the first hinge unit 5 and the second hinge unit 6 respectively, the motor 10 can be disposed easily in the motor holder 1.

In the present embodiment, the motor holder 1 includes two pair of projections 9, each being disposed at two opposing locations with the intermediary of the centerline of the output shaft 11, are provided. However, the present invention is not limited thereto. In other words, the motor holder 1 may have more than two pairs of projections and the projections may abut entirely against the periphery of the side surfaces at the end portion of the motor 10 on the side opposite from the output shaft 11. With the motor holder 1 in such construction, the motor 10 can be pivoted by 360° in the stable state.

As described above, according to the present invention, when assembling the motor and the planet gear mechanism, engagement between the sun gear and the planet gear may be adjusted by pivoting the sun gear by pivoting the motor held by the motor holder about the projections. Therefore, engagement between the sun gear and the planet gear may be adjusted by such a simple component as a motor holder having the plurality of projections. Therefore, the manufacturing cost may be reduced.

In the invention described above, when the plurality of pairs of projections, each being disposed at two opposing locations with the intermediary of the centerline of the output shaft, are provided, the motor can be pivoted by 360° with the stable state, and thus accuracy of adjustment of engagement between the sun gear and the planet gears may be improved.

In the invention described above, even when the motor holder has a projection that abuts against the entire periphery of the side surfaces of the end portion of the motor on the side opposite from the output shaft instead of the plurality of projections, the motor can be pivoted by 360° in the stable state. Therefore, accuracy of adjustment of engagement between the sun gear and the planet gear may be improved.

When the invention described above is constructed in such a manner that the motor holder is provided with a pair of side plates disposed on the side of the motor in parallel with the output shaft, a first end plate opposing the end surface of the motor on the output shaft side, and a second end plate opposing the end surface of the motor on the side opposite from the output shaft side, that the pair of side plates are provided respectively with the projections, that the first end plate is divided into an end plate strip integrated with one of the pair of side plates and an end plate strip integrated with the other one of the pair of side plates, that the second end plate includes a first hinge unit for rotatably supporting the one of side plate in such a direction that the one end plate strip moves away from the other end plate strip, and a second hinge unit for rotatably supporting the other side plate in such direction that the other end plate strip moves away from the one end plate strip, and that each end plate strip is formed with a notch for forming a hole thorough which the output shaft is arranged, the one side plate and the one end plate strip being integral therewith may be opened and closed with respect to the other side plate and the other end pate strip being integral therewith by rotating each of the pair of side plates about the first hinge unit and the second hinge unit respectively. Therefore, the motor is disposed easily in the motor holder.

## Claims

1. A manual input device comprising:
an operating member to be rotated manually;
a motor for exerting a rotational force to the operating member;
a planet gear mechanism having a sun gear to be fixed to the output shaft of the motor, a plurality of planet gears engaging the sun gear and moving around the sun gear, a ring gear engaging the planet gears on the inner peripheral side thereof, a carrier for rotatably supporting the plurality of planet gears and rotating along with the movement of the planet gears around the sun gear, and a carrier shaft rotating integrally with the carrier and the operating member;
detecting means for detecting at least one of the direction of rotation and the amount of rotation of the output shaft of the motor;
control means for controlling the motor so that the predetermined rotational force is exerted to the operating member according to at least one of the direction of rotation and the amount of rotation of the output shaft detected by the detecting means; and
a motor holder having at least one projection which abut against the side surfaces of the end portion of the motor on the side opposite from the output shaft side for holding the motor.

2. A manual input device according to Claim 1, wherein a plurality of pairs of such projections are provided in such a manner that a pair of projections are disposed at two opposite locations with the intermediary of the centerline of the output shaft.

3. A manual input device according to Claim 1, wherein the motor holder has a projection that comes into abutment with the entire periphery of the side surfaces of the end portion of the motor on the side opposite from the output shaft side.

4. A manual input device according to any of Claims 1 to 3, wherein the motor holder comprises:
a pair of side plates disposed on the side of the motor in parallel with the output shaft;
a first end plate opposing the end surface of the motor on the side of the output shaft; and
a second end plate opposing the end surface of the motor on the side opposite from the output shaft side,
wherein the pair of side plates are provided with the projections respectively,
wherein the first end plate is divided into an end plate strip integrated with one of the pair of side plates and an end plate strip integrated with the other one of the pair of side plates,
wherein the second end plate includes a first hinge unit for rotatably supporting the one of side plates in such a direction that the one end plate strip moves away from the other end plate strip, and a second hinge unit for rotatably supporting the other side plate in such direction that the other end plate strip moves away from the one end plate strip, and
wherein the each end plate strip is formed with a notch forming a hole thorough which the output shaft is arranged.
